# EUROPEAN PATENT SPECIFICATION

(11) **EP 1 779 913 B1**
(45) Date of publication and mention of the grant of the patent: **09.03.2016**
(21) Application number: 06122056.2
(22) Date of filing: 10.10.2006
(51) Int. Cl.: B01D 29/54, B01D 29/58, B01D 37/04, B01D 65/10, B01D 46/44

(54) **FILTRATION DEVICE**
FILTERVORRICHTUNG
APPAREIL DE FILTRATION

(30) Priority: 21.10.2005 US 728914 P
(43) Date of publication of application: 02.05.2007
(73) Proprietor: EMD Millipore Corporation, Billerica, MA 01821 (US)
(72) Inventor: Nauseda, Curtis, Maynard, MA 01754 (US); Backes, Kari, Westford, MA 01886 (US); Rautio, Kevin, Manchester-By-The-Sea, MA 01944 (US)
(74) Representative: Henkel, Breuer & Partner

(56) References cited:
- EP-A- 0 640 822
- EP-A- 1 775 015
- DE-A1- 19 726 379
- US-A- 3 954 621
- US-A- 4 515 007
- US-A- 4 909 937
- US-B1- 6 327 893

## Description

The present invention relates to a device containing multiple layers of filters or membrane that is capable of being integrity tested. More particularly, it relates to a filtration device containing multiple layers of filters or membrane, each of which is capable of being integrity tested individually within an assembled device.

### Background of the Invention

Some filter devices contain two or more layers of membrane sandwiched together in order to gain certain performance characteristics such as retention. It is important that each layer remain integral and defect free throughout the assembly process and during its use.

Normally integrity testing is done to the finished product containing the multiple layers through an air diffusion test. This test wets out the membrane layers with a suitable liquid, such as water, alcohol or mixtures of the two (depending on whether the filter is hydrophilic or hydrophobic). Air at a set pressure(s) is applied to one side of the wetted membrane and air flow on the other side is measured. If the flow increase downstream is too quick or at a low pressure, this indicates that there is a defect in the filter or its sealing into the device. The problem with using this test in devices with multiple layers of membrane is that only the overall device is tested and the test can only indicate if there is a defect in all the layers. A defect in one layer may not provide one with a conclusive indication of a defect.

What is needed is a device that allows one to independently test each layer of membrane in an integrated multilayered device. The present invention allows One the ability to do so.

US 3954621 A discloses a filtration system comprising a prefilter and a main filter both provided in a housing and a void space integral with the housing between the prefilter and the main filter. An inlet and an outlet in the housing allow a fluid to be filtered to flow from the inlet through the prefilter across the void space through the main filter and finally through the outlet of the filtration system. The void space is connected to a conduit to direct backwashed water into the space between prefilter and main filter for the purpose of cleaning the prefilter.

DE 19726379 A1 discloses an integrity testing adapter for single filter modules which are serially arranged. The filter modules having a hollow cylindrical form are housed in a tube wherein the integrity testing adapter comprises two sampling lines to be inserted into the inside of the filter modules to individually test the integrity of each of the filter modules. For the integrity testing procedure the tube housing of the filter modules has to be opened, the adapter has to be inserted and flanges attached to the sampling lines seal the single filter modules. The sampling lines are connected externally with testing means wherein for a testing fluid is introduced into a sealed filter module allowing to test the integrity of the filter modules.

US 4909937 A discloses an integral filter enclosed in a surrounding housing. The housing comprises three connections for supplying and emptying the housing. Inside the housing two tubular filter elements are concentrically arranged wherein an intermediary space is provided between the tubular filter elements. A fluid to be filtered flows from an inlet (first connection) into the housing, through the outer tubular filter element into the intermediary space and from the space through the inner tubular filter to a second space and to the outlet (second connection). Additionally a third connection is provided between the intermediate space and the outer side of the housing. This third connection can be used for example to supply the intermediary space with a testing media.

### Summary of the Invention

The present invention provides a filtration device as defined in claim 1.

The filtration device of the present invention can be used in a process for the independent testing of two or more areas of filtration material in the filtration device of the invention.

This process comprises the steps of:
i) testing the integrity of the first area of filtration material by closing the outlet and opening the port, wetting the first area of filtration material with a suitable liquid, flowing through one of the inlet or the port-one or more fluids selected from the group consisting of gases and liquids through the first area of filtration material and out the respective other one of the inlet or the port to a downstream detector;
ii) determining the integrity of the first area of filtration material;
iii) testing the integrity of the second area of filtration material by closing the inlet and opening the port, wetting the second area of filtration material with a suitable liquid, flowing through one of the outlet or the port one or more fluids selected from the group consisting of gases and liquids through the second area of filtration material and out the respective other one of the port or the outlet to the downstream detector; and
iv) determining the integrity of the second area of filtration material.

The present invention relates to a device having two or more separate filtration layers that can be independently tested for integrity when in an assembled device yet which allow for serial filtration through the two or more layers to obtain the desired characteristics such as retention.

### In the Drawings

Figure 1 shows a first example of a filtration device serving to explain features of the present invention in cross-sectional view.
Figures 2A-C show the operation of the first example in cross-sectional view.
Figure 3 shows an embodiment of the present invention in exploded view.
Figure 4 shows a cross-sectional view of the spacer of Figure 3.
Figure 5 shows a further embodiment of the present invention in cross-sectional view.
Figures 6A-C show the operation of the further embodiment of the present invention in cross-sectional view.
Figure 7 shows another example of a filtration device serving to explain features of the present invention.
Figure 8 shows a further example of a filtration device serving to explain features of the present invention.
Figures 9A-C show an additional example of a filtration device serving to explain features of the present invention in cross-sectional view.
Figure 10 shows a further example of a filtration device serving to explain features of the present invention in cross-sectional view.
Figure 11 shows the example of Figure 10 with multiple layers.

### Detailed Description of the Invention

The present invention comprises a filter housing having two or more layers of filters. Each layer is preferably spaced apart from each other so as to provide a chamber or gap between them. A port or vent is located within the chamber or gap between the two layers to provide an intermediate path for gas or liquid to flow through one layer of filter or membrane and out the vent or port for integrity testing.

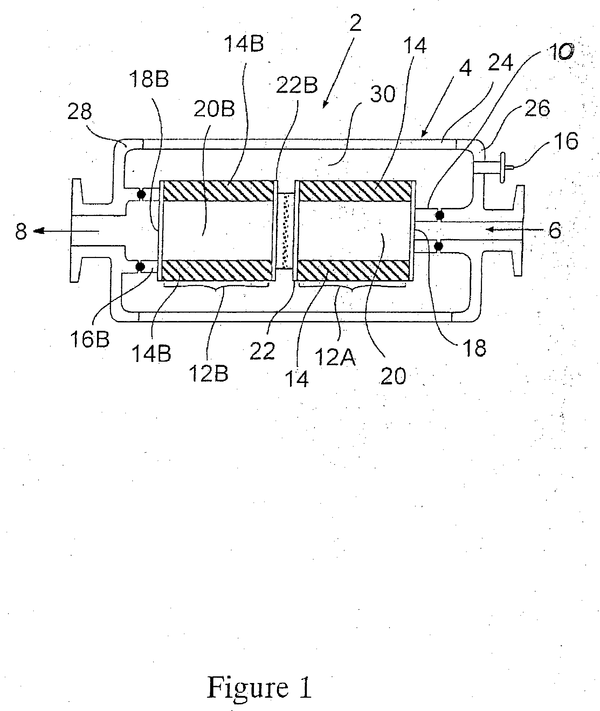

Figure 1 shows a first example of a filtration device serving to explain features of the present invention. The device 2 is comprised of a housing 4 having an inlet, 6, an outlet 8 and a vent 10 and two or more filtration layers 12 A and B (in this instance two are shown). The first filtration layer 12A is liquid tightly sealed to the inlet of the housing 4.

As shown, the first layer 12A has a filter element 14, preferably a pleated filter element as shown, a first endcap 16 sealed to a first end of the filter element 14 and having an opening 18 in fluid communication with the inlet 6 of the housing 4 and a central core 20 that is porous to allow for fluid communication between the opening and the filter element 14. The other end of the filter element 14 is sealed to a closed second endcap 22.

As shown, the second layer 12B has a filter element 14B, preferably a pleated filter element as shown, a first endcap 16B sealed to a first end of the filter element 14B and having an opening 18B in fluid communication with the outlet 8 of the housing 4 and a central core 20B that is porous to allow for fluid communication between the opening 18B and the filter element 14B. The other end of the filter element 14B is sealed to a closed second endcap 22B. Preferably the two closed endcaps 22 and 22B are sealed to each other although they do not need to be so.

Also as shown, the housing may be formed of two or more pieces for assembly purposes. In the first example, the housing 4 is of three pieces, a main body 24 and two housing endcaps 26 and 28 that contain the inlet 6 and outlet 8 respectively. The pieces 24-28 are liquid tightly sealed together such as by thermal or ultrasonic bonding, solvent bonding, overmolding, adhesives and the like as are well-known in the industry.

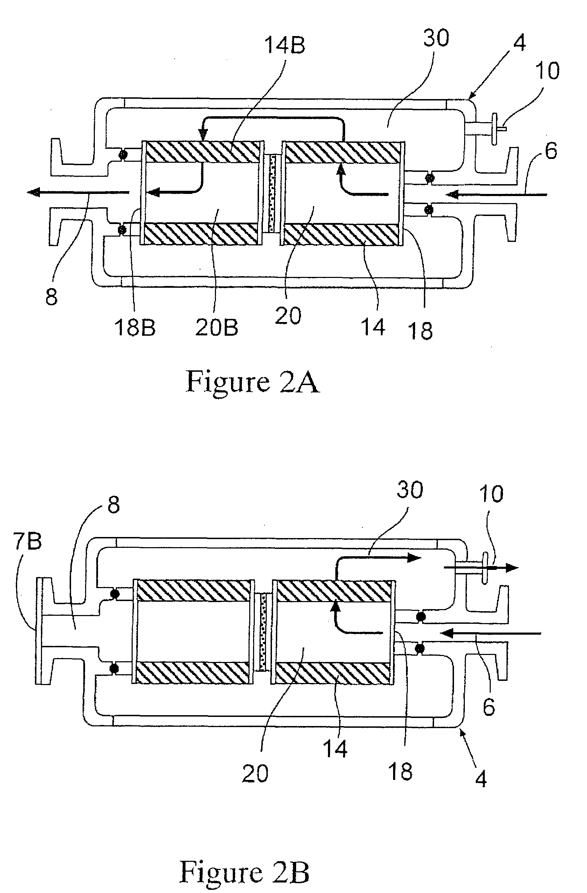

Once assembled, the device needs to be integrity tested. Figures 2A-C show how this is done.

In Figure 2A, the normal filtration flow is shown by the arrows. Fluid enters the inlet 6 into opening 18 of the first layer and then into the core 20. Fluid then passes through the filter element 14 leaving behind any contaminant that the filter is designed to remove by such well-known processes as size exclusion, adsorption, philicity/phobicity or charge repellation. Fluid exits the first element and enters the inner bore 30 of the housing. It then enters the second filter layer 14B passing through to the core 20B out through the opening 18B and into the outlet 8 by which it leaves the housing 4. As with the first layer, fluid passing through the filter element 14B leaves behind any contaminant that the filter is designed to remove by such well-known processes as size exclusion, adsorption, philicity/phobicity or charge repellation. The filter may be the same as the first layer or if desired it may be different in size exclusion characteristics, adsorptive capabilities and the like.

To integrity test the first layer, the set up of Figure 2B is used. Here the first filter layer 12A is wetted with a suitable liquid for the gas or gases to be used. The outlet 8 is then closed (as shown by cap 7B although other means such as a valve (not shown) or the like may be used) and the vent 10 is opened and connected to a suitable detection device (not shown). One or more selected gases or liquids are flowed through the inlet 6 at a predetermined pressure or series of pressures and the change in flow or gas concentration (explained below) is measured by the detection device that has been coupled to the vent 10. If desired, the test can also be performed in reverse for all embodiments, in the vent and out the "inlet" or "outlet depending upon the filtration element being tested

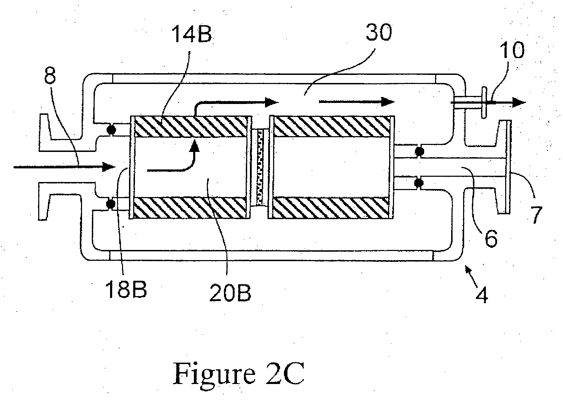

To test the integrity of the second layer 12B, the set up of Figure 2C is used. Here the second filter layer 12B is wetted with a suitable liquid for the gas or gases to be used. The inlet 6 is then closed (as shown by cap 7 although other means such as a valve (not shown) or the like may be used) and the vent 10 is opened and connected to a suitable detection device (not shown). One or more selected gases are flowed through the outlet 8 at a predetermined pressure or series of pressures and the change in flow or gas concentration (explained below) is measured by the detection device that has been coupled to the vent 10.

One can then compare the tested value of each layer to the value or range of acceptable values provided by the manufacturer to determine whether each layer is integral. If so, the device may be used.

A similar process may be used after filtration of the fluid (gas or liquid) to ensure that the integrity of the device remained throughout its use by using the same process steps as described in Figures 2A-C.

As each layer can be independently tested for integrity one can use a conventional test such as the air/water diffusion test described in the text above. Alternatively, one can use a more sophisticated and sensitive test such as a binary gas test as claimed in a co-pending application filed this day entitled "Methods and Systems for Integrity testing of Porous Materials" by John Lewnard. In this test, the selected filter layer is wetted with a liquid that is suitable for the binary gases used. For example one can use water, alcohol, mixes of water and alcohol and the like depending upon the gases selected. Two gases are chosen such that one has a high solubility in the liquid of choice and the other has a lower solubility in that same liquid. Selected gases include but are not limited to carbon dioxide, hydrogen, helium, Freon, sulfur hexafluoride or other perfluoro gases, noble gases and the like. Carbon dioxide is a preferred high permeability gas and hydrogen, helium and perfluorocarbons gases are preferred low permeability gases for many filters. The binary gas mixture is introduced as described in Figures 2A-C in a predetermined amount relative to each other and the amount of one or both of the gases is measured by the detection device such as a gas chromatograph or a mass spectrometer on the downstream side of the filter layer to determine whether there is a shift in the relative amount of each gas in the detected gas stream. Where the measured amount of gas differs from the predetermined amount of gas initially added to the system, a defect is detected. If no difference in concentration is found, the layer is determined to be integral. Integral, when referring herein to a porous material, means non-defective. The predetermined amount may be, for example, the amount of gas calculated to diffuse through the integral, wetted porous material at a given temperature and pressure. The given temperature and pressure may be the temperature and pressure under which the test is conducted.

Another method of integrity testing of testing integrity is to use a liquid-liquid porometry test as shown in US 5,282,380 and 5,457,986 (DiLeo) which may also be used in the present invention.

The method of integrity testing used is not critical to the invention. Any method that provides one with a suitable value of integrity and which is not destructive to the device can be used.

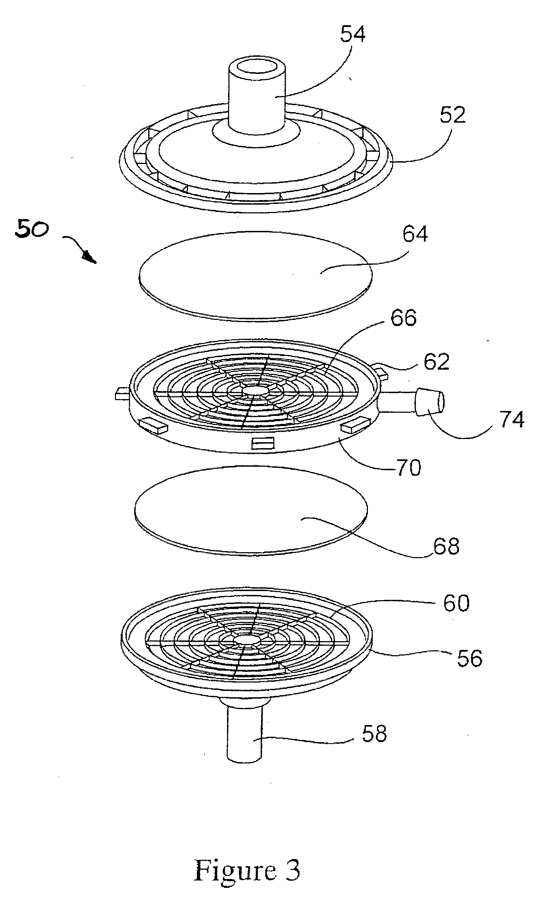

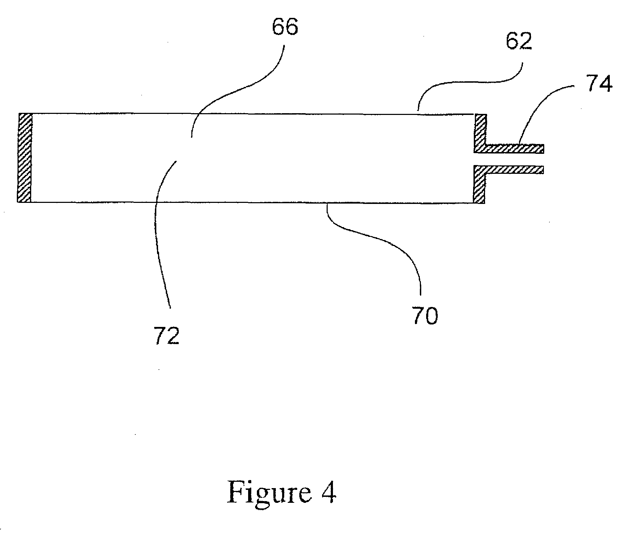

Figure 3 shows an embodiment of the present device with two or more layers of serial filtration layers. In this embodiment, two layers are shown although additional layers with additional spacer plates may be used. The device 50 has a first housing component 52 that contains an inlet 54. There is a corresponding second housing component 56 at the other end of the device 50 that contains the outlet 58. Also as shown in the second housing component 56 is a porous membrane support grid 60. This is an optional element in the first housing component. Between the two components 52 and 56 is spacer plate 62. The spacer plate 62 has a membrane 64 adjacent and preferably on its upper surface 66 and a second membrane 68 adjacent and preferably on its lower surface 70. As shown, the upper surface 66 has porous membrane support grid and preferably the lower surface 70 has a similar structure although it is not necessarily needed on the lower surface 70. There is a chamber 72 (as shown in Figure 4) in the spacer between its upper and lower surfaces. The two surfaces 66 and 70 and the chamber 72 are in fluid communication with each other. Also within the chamber 72 is port 74.

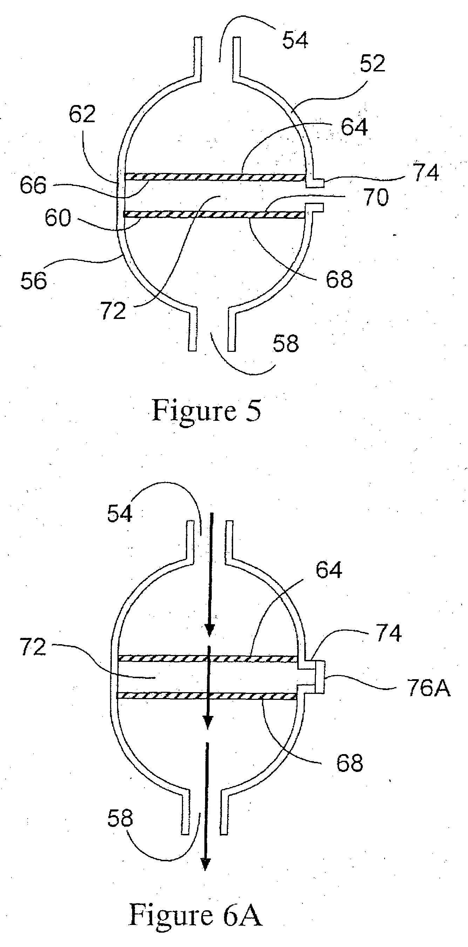

The device is assembled as shown in Figure 5. All elements listed in figure 5 are the same as those in Figures 3 and 4 above. The filters or membranes can be retained within the device by a variety of methods as are known in the art including but not limited to heat or solvent bonding of the membrane or filter to the upper 66 and lower 70 surfaces of the spacer 62. They may also be secured by an overmolding technique if desired.

Figure 6A shows the normal flow through the device. Fluid enters the inlet 54 flows through the first filter layer 64 into chamber 72 then through the second filter layer 68 and then out through outlet 58. In this mode, the port 74 is closed off with a cap 76A as shown although other devices such as valves or plugs (not shown) may be used as well.

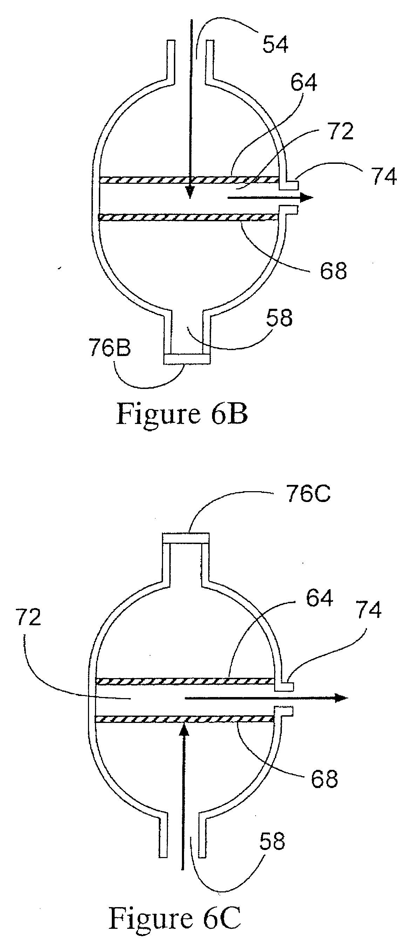

Figure 6B shows how the first layer 64 is integrity tested. Here the first filter layer 64 is wetted with a suitable liquid for the fluid such as a gas or gases or other liquid to be used. The outlet 58 is then closed by cap 76B and the port 74 is opened and connected to a suitable detection device (not shown). One or more selected fluids are flowed through the inlet 54 at a predetermined pressure or series of pressures, through the wetted membrane 64 and into chamber 72. The fluid then flows out the port 74 and the change in flow or fluid concentration is measured by the detection device that has been coupled to the port 74. An integrity value of the first layer is determined from the test results and it either passes or fails.

Figure 6c shows how the second layer 68 is integrity tested. Here the second filter layer 68 is wetted with a suitable liquid for the fluid such as a gas or gases or other liquid to be used. The inlet 54 is then closed by cap 76C and the port 74 is opened and connected to a suitable detection device (not shown). One or more selected fluids are flowed through the outlet 58 at a predetermined pressure or series of pressures, through the wetted membrane 68 and into chamber 72. The fluid then flows out the port 74 and the change in flow or fluid concentration is measured by the detection device that has been coupled to the port 74. An integrity value of the first layer is determined from the test results and it either passes or fails.

If all layers pass the device is ready for use. As described above, the same or similar test may be repeated if desired after use to ensure integrity of the device through its use.

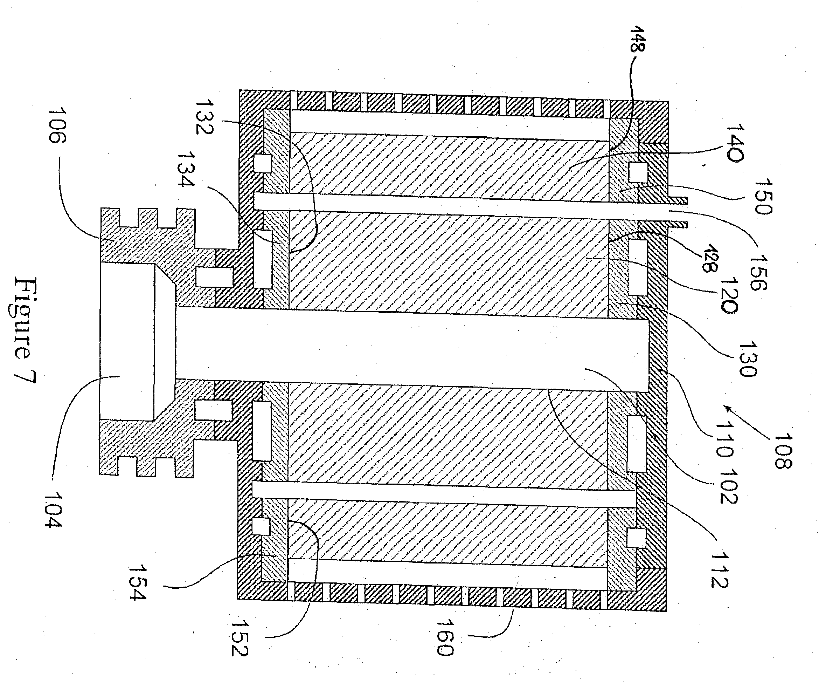

Figure 7 shows another example of a filtration device serving to explain features of the present invention. The core 102 has an outlet 104 formed on one end 106. The core 102 extends into the interior of the cartridge 108 and is sealed at the top 110. The core 102 has a series of openings 112 formed in a portion of its side wall(s). The core 102 is in fluid communication with interior of the cartridge 108 and the outlet 104.

Arranged concentrically around the core 102 is a first membrane layer 120. The first layer 120 is preferably cylindrical in shape although other cross-sectional shapes such as oval, triangular or polygonal can be used. Preferably the membrane layer 120 is pleated to increase the available surface area. The first membrane layer 120 is sealed along its vertical edges(not shown), preferably by a seam (not shown) as is well-known in the art. The top horizontal surface 128 of the membrane is sealed to a first end cap 130 such as by polymer adhesion, solvent bonding, adhesives or overmolding. Likewise the bottom horizontal surface 132 of the membrane 120 is sealed to a second end cap 134 such as by polymer adhesion, solvent bonding, adhesives or overmolding.

Arranged concentrically outside around the first membrane layer 120 but spaced apart from it is a second membrane layer 140. The second layer 140 is preferably cylindrical in shape although other cross-sectional shapes such as oval, triangular or polygonal can be used and it preferably has the same shape as the first layer 120. Preferably the second membrane layer 140 is pleated to increase the available surface area. The second membrane layer 140 is sealed along its vertical edges (not shown), preferably by a seam (not shown) as is well-known in the art. The top horizontal surface 148 of the membrane layer 140 is sealed to a first end cap 150 such as by polymer adhesion, solvent bonding or adhesives. Likewise the bottom horizontal surface 152 of the membrane 140 is sealed to a second end cap 154 such as by polymer adhesion, solvent bonding or adhesives.

As shown, the inner edges of the first and second endcaps 130, 134 of the first membrane layer 120 are liquid tightly sealed to the respective outer surfaces of the core 102. The inner edges of the first and second endcaps 150, 154 of the second membrane layer 140 are liquid tightly sealed to the respective outer surfaces of the first and second endcaps 130, 134 of the first membrane layer 120. Arranged concentrically outward and around the second membrane layer 140 is a porous cartridge housing 160 that is liquid tightly sealed to the outer edges of the endcaps 150, 154 of the second membrane layer 140 and which acts as an inlet to the device. In this manner, liquid which enters the housing 160 must flow through the first and then the second membrane layers 120, 140 before entering the core 102 and leaving the filter through the outlet 104.

Located in the space between the first layer 120 and the second layer 140 is a port 156 that allows for the integrity testing of each layer individually when in an assembled form. The method of doing so is similar to the methods described above for the examples and embodiments of Figures 2A-C and 6A-C.

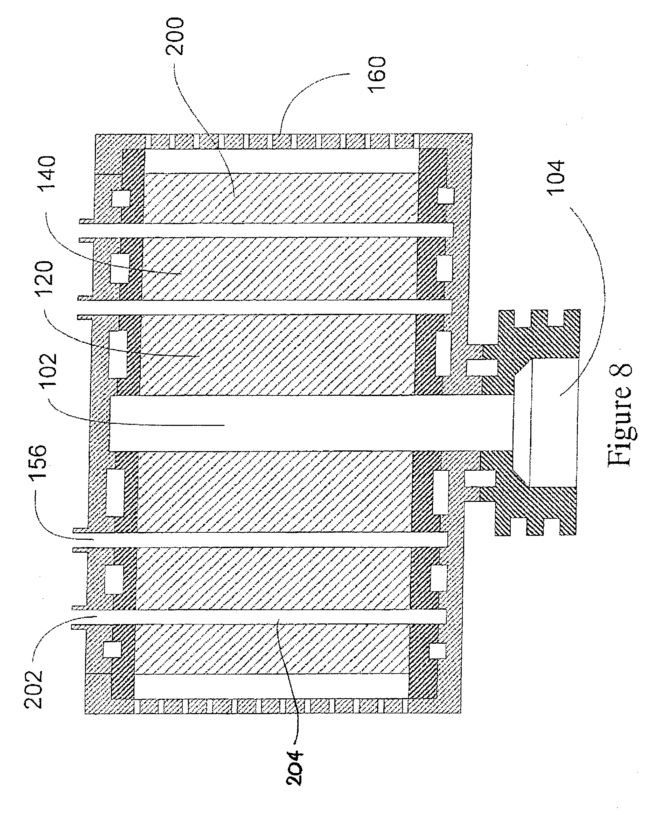

Figure 8 is a modification of the device of Figure 7 in which a third filter layer 200 is added concentrically outward from the second layer but inward of the outer housing 160. A second port 202 is located in the housing between the second layer 140 and the third layer 200 and in fluid communication with the space 204 between the two layers 140 and 200.

To test the third layer 200 of membrane, one closes port 156 and the outlet 104 as described herein above. The third layer is wetted by introducing a liquid to it through either the porous housing wall 160 or the port 202. A fluid such as a gas or gases or a liquid as described above can be flowed through the housing wall 160, the third layer 200 and out port 202 to a suitable detector.

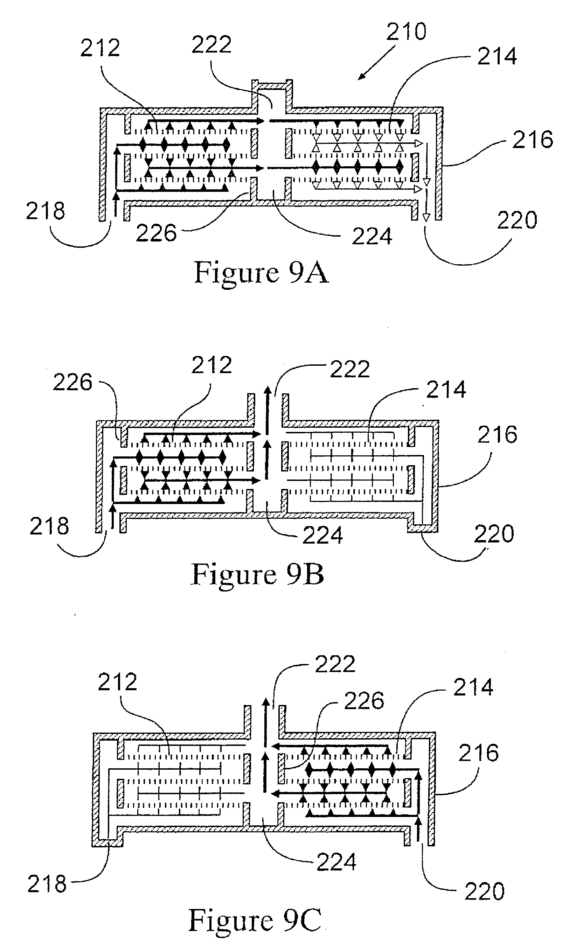

Figures 9A-C show another example of a filtration device serving to explain features of the present invention. In this example, the device 210 is a flat sheet filtration device formed of two areas of filters 212 and 214, each of which is capable of being independently tested for integrity in the device 210. The device has a housing 216 containing an inlet 218, an outlet 220, an intermediate port 222 and a central core 224. As shown, the first areas of filters 212 are selectively sealed to non-porous supports 226 arranged in the housing 216 to create a flow path between the inlet 218 and the core 224 through the filters 212. Likewise the second areas of filters 214 are selectively sealed to non-porous supports 226 arranged in the housing 216 to create a flow path between the core 224 or intermediate port 222 through the filters 214 to the outlet 220.

In a normal usage as shown by Figure 9A, fluid flows in through the inlet 218, then through the first areas of filters 212 into the central core 224. Intermediate port 222 is closed during this operation. The fluid then flows through the second filter areas 214 and out the outlet 220.

To test the integrity of the first areas of filters 212, the outlet 220 is closed and the port 222 is opened as shown in Figure 9B. The filters are wet and then at least one fluid (gas or liquid) is applied to the filter area 212 through the inlet 218 at the desired pressure(s) and a detector for the flow of concentration change is mounted downstream of the port 222 to detect the change and provide one with a value.

To test the integrity of the second areas of filters 214, the inlet 218 is closed and the port 222 is opened as shown in Figure 9C. The filters are wet and then at least one fluid (gas or liquid) is applied to the filter area 214 through the outlet 220 at the desired pressure(s) and a detector for the flow of concentration change is mounted downstream of the port 222 to detect the change and provide one with a value.

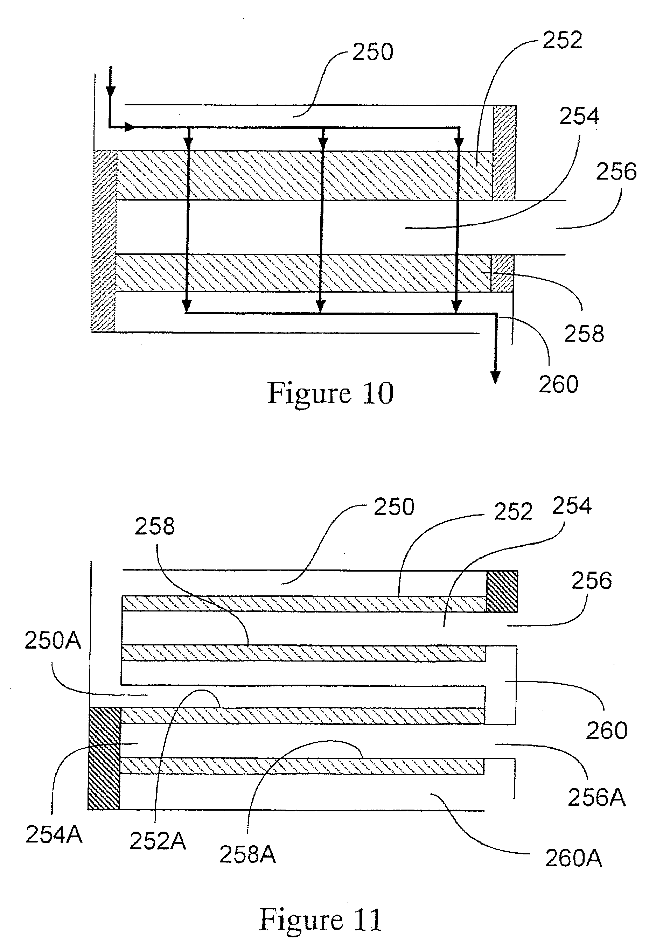

Figures 10 and 11 show another example of a serial filtration device using flat sheets of filters. The design can be a stacked flat sheet arrangement as in known in the art such as but not limited to, Prostak® and Pellicon® cassette systems available from Millipore Corporation of Billerica, Massachusetts. In Figure 10 a single cassette is shown. It comprises an inlet manifold 250, a first filter layer 252, an intermediate spacer layer 254 with a port 256, a second filter layer 258 and an outlet manifold 260, all sealed together into a single unit. The integrity of each layer is tested in the manner mentioned above with the other examples and embodiments by selectively sealing off one of the inlet 250 or outlet 260 and opening the port 256.

Figure 11 shows a typical two cassette system using the example. To the extent the elements are the same as in Figure 10 the same reference numbers have been used. Each unit is stacked adjacent to each other and designed so that the inlets and outlets align with each other. Each unit has its own port 256 that services the filters within the unit. A plurality of these units can be stacked together into a common holder with a common inlet and outlet and used as a multi-cassette style system as is well known in the industry.

In devices containing three or more layers, there should be a port between each layer of filter. In this way, the ports on each side of the layer to be tested are used as the inlet and the outlet for the integrity test. Optionally, in another example of a filtration device serving to explain features of the present invention, a device can be made with one valve that is used to open or close a chamber that connects to ports between several layers, so that a stack of several membrane pairs can be tested at once.

Thus with the present invention one can integrity test an infinite number of layers in a device by providing a selectively openable and closable port between each of the layers that provides for the integrity testing of each layer independently in an integral serial filtration device.

The device of the present invention and methods can be used with any filter media of any size that is capable of being integrity tested using gases or liquids. The membrane may be a microporous, ultrafiltration (UF), nanofiltration or reverse osmosis membrane formed of a polymer selected from olefins such as polyethylene including ultrahigh Molecular weight polyethylene, polypropylene, EVA copolymers and alpha olefins, metallocene olefinic polymers, PFA, MFA, PTFE, polycarbonate, vinyl copolymers such as PVC, polyamides such as nylon, polyesters, cellulose, cellulose acetate, regenerated cellulose, cellulose composites, polysulfone, polyethersulfone (PES), polyarylsulfone, polyphenylsulfone, polyacrylonitrile, polyvinylidene fluoride (PVDF), and blends thereof. The membrane selected depends upon the application, desired filtration characteristics, particle type and size to be filtered and the flow desired.

The other filter components such as end caps, inlets, outlets, housings, cores, ports, valves, etc., can be made of a variety of materials, such as metal, ceramic, glass or plastic. Preferably, the components are formed of plastics, more preferably thermoplastics, such as polyolefins, especially polyethylene and polypropylene, homopolymers or copolymers thereof, ethylene vinyl acetate (EVA) copolymers; polysulfones, polyethersulfone (PES), polyarylsulfone, polyphenylsulfone, polycarbonates; styrenes; PTFE resin; thermoplastic perfluorinated polymers such PFA; nylons and other polyamides; PET and blends of any of the above.

### Example

A device made according to the embodiment of Figure 3 using a PES ultrafiltration membrane available from Millipore Corporation was made.

Both top and bottom layers of membrane were wet with water, the port was opened and the outlet was closed by inserting a plug. Air at 517.11 kPa (75 psi) was flowed through the inlet to the filter layer and a flow meter that was positioned downstream of the port to read the flow. The results were <.01 cc/min.

To test the second layer, the port was opened and the inlet was closed by inserting a plug. Air at 75 psi was flowed through the outlet to the filter layer and a flow meter that was positioned downstream of the port to read the flow. The results were <.01 cc/min.

The recommended value for the membranes as supplied by the vendor was <.01cc/min. As the measured value for each layer was within this range, each layer and the device as a whole was determined to be integral.

## Claims

1. A filtration device having two or more areas of filtration material that are capable of being independently tested for integrity, the device comprising:
a housing including a first housing component (52) having an inlet (54), and a second housing component (56) having an outlet (58);
at least one spacer plate (62) which is located between the two housing components (52,56) and which is formed as a separate element and includes a port (74); and
at least two independent filtration layers (64,68) which are filters or membranes, wherein said filtration layers (64,68) are arranged on spaced apart sides of said at least one spacer plate (62) so as to face each other and such that a space in the form of a chamber (72) is defined in the spacer plate (62) between the adjacent filtration layers (64,68), wherein said spacer plate (62) has an upper surface (66) and a lower surface (70) and said upper surface (66) has a porous membrane support grid, and wherein said filtration layers (64,68) are further arranged in the device such that a fluid to be filtered can serially flow from said inlet (54) through said areas of filtration material and out of said outlet (58); and
wherein the port (74) of each spacer plate (62) is in fluid communication with said chamber (72) and the outside of the device; and
wherein a porous membrane support grid (60) is in the second housing component (56).

## Patentansprüche

1. Eine Filtervorrichtung mit zwei oder mehr Bereichen von Filtermaterial, die unabhängig auf Integrität getestet werden können, wobei die Vorrichtung aufweist:
ein Gehäuse mit einer ersten Gehäusekomponente (52) mit einem Einlass (54) und einer zweiten Gehäusekomponente (56) mit einem Auslass (58),
mindestens einer Abstandhalterplatte (62), die sich zwischen den zwei Gehäusekomponenten (52,56) befindet und die als ein separates Element ausgebildet ist und einen Anschluss (74) aufweist, und
mindestens zwei unabhängigen Filterschichten (64,68), die Filter oder Membranen sind, wobei die Filterschichten (64,68) auf voneinander beabstandeten Seiten der mindestens einen Abstandhalterplatte (62) angeordnet sind, derart, dass sie einander zugewandt sind, und derart, dass ein Raum in der Form einer Kammer (72) in der Abstandhalterplatte (62) zwischen den angrenzenden Filterschichten (64,68) definiert ist, wobei die Abstandhalterplatte (62) eine obere Oberfläche (66) und eine untere Oberfläche (70) besitzt und die obere Oberfläche (66) ein poröses Membran-Tragegitter besitzt, und wobei die Filterschichten (64,68) ferner in der Vorrichtung so angeordnet sind, dass ein zu filterndes Fluid seriell von dem Einlass (54) durch die Bereiche von Filtermaterial und aus dem Auslass (58) heraus strömen kann, und
wobei der Anschluss (74) jeder Abstandhalterplatte (62) in Fluidverbindung mit der Kammer (72) und der Außenseite der Vorrichtung ist, und
wobei ein poröses Membran-Tragegitter (60) sich in der zweiten Gehäusekomponente (56) befindet.

## Revendications

1. Dispositif de filtration ayant deux zones ou plus de matériau de filtration qui peuvent être indépendamment testées pour intégrité, le dispositif comprenant :
un boîtier comprenant un premier composant de boîtier (52) ayant une entrée (54), et un second composant de boîtier (56) ayant une sortie (58) ;
au moins une plaque d'espacement (62) qui est positionnée entre les deux composants de boîtier (52, 56) et qui est formée comme un élément séparé et comprend un orifice (74) ; et
au moins deux couches de filtration indépendantes (64, 68) qui sont des filtres ou des membranes, dans lequel lesdites couches de filtration (64, 68) sont agencées sur des côtés espacés de ladite au moins une plaque d'espacement (62) afin de se faire face et de sorte qu'un espace se présentant sous la forme d'une chambre (72) est défini dans la plaque d'espacement (62) entre les couches de filtration (64, 68) adjacentes, dans lequel ladite plaque d'espacement (62) a une surface supérieure (66) et une surface inférieure (70) et ladite surface supérieure (66) a une grille de support de membrane poreuse, et dans lequel lesdites couches de filtration (64, 68) sont en outre agencées dans le dispositif de sorte qu'un fluide à filtrer peut s'écouler en série à partir de ladite entrée (54) en passant par lesdites zones de matériau de filtration et sortir par la sortie (58) ; et
dans lequel l'orifice (74) de chaque plaque d'espacement (62) est en communication de fluide avec ladite chambre (72) et l'extérieur du dispositif ; et
dans lequel une grille de support de membrane poreuse (60) est dans le second composant de boîtier (56).
